# EUROPÄISCHE PATENTSCHRIFT

(11) **EP 3 064 477 B1**
(45) Veröffentlichungstag und Bekanntmachung des Hinweises auf die Patenterteilung: **13.06.2018**
(21) Anmeldenummer: 16156612.0
(22) Anmeldetag: 21.02.2016
(51) Int. Cl.: C02F 1/56, C02F 1/68, C02F 1/50, C02F 103/00, C02F 101/10

(54) **VERWENDUNG EINES STOFFGEMISCHS ZUR GIPSABSCHEIDUNG AUS EINER FLÜSSIGKEIT**
USE OF A MIXTURE OF SUBSTANCES FOR SEPARATING GYPSUM FROM A LIQUID
UTILISATION D'UN MÉLANGE DE MATIÈRE DESTINÉ A SÉPARER DU GYPSE D'UN LIQUIDE

(30) Priorität: 02.03.2015 DE 102015002515
(43) Veröffentlichungstag der Anmeldung: 07.09.2016
(73) Patentinhaber: BDT GmbH, Gesellschaft für Gerätetechnik, 77656 Offenburg (DE)
(72) Erfinder: STEMMER, Ditmar, 77704 Oberkirch (DE)
(74) Vertreter: Patentanwälte Bregenzer und Reule Partnerschaftsgesellschaft mbB

(56) Entgegenhaltungen:
- EP-A1- 2 205 643
- CN-A- 102 627 335
- US-A1- 2006 100 406
- US-A1- 2014 322 351

## Beschreibung

Die Erfindung betrifft die Verwendung eines Stoffgemischs als Gipsabscheidemittel in einer Gipsabscheidevorrichtung.

Gipsabscheider werden vielfach in der Zahntechnik eingesetzt und zwischen einem Ausgussbecken und der Hausabwasserleitung installiert. Übliche Gipsabscheider, wie sie beispielsweise in der DE 296 21 590 U1 oder der DE 10 2010 047 904 A1 beschrieben sind, weisen mehrere Kammern auf, die durch Trennwände voneinander getrennt sind. Mit Gips verunreinigtes Abwasser wird in eine erste Kammer eingeleitet, die sich über einen Überlauf in eine zweite Kammer entleert, an die sich eine dritte Kammer anschließt und so weiter. In jeder der Kammern scheiden sich Gipsschwebstoffe am Boden ab, so dass das in die jeweils nächste Kammer übergeleitete Wasser weniger Verschmutzungen aufweist. Aus der letzten Kammer wird schließlich über einen Überlauf das solchermaßen vorgereinigte Wasser der Hausabwasserleitung zugeführt. Um das Abscheiden von Gips zu beschleunigen, werden verschiedentlich Flockungsmittel eingesetzt, die dem Abwasser zugesetzt werden und die Schwebstoffe wie Gips binden, um deren Abscheiden zu beschleunigen. Oftmals sind mit Gips verunreinigte Abwässer aber zusätzlich mit organischen Verunreinigungen belastet, so dass von Gipsabscheidern eine Geruchsbelästigung ausgehen kann, insbesondere wenn sich organische Verunreinigungen zusammen mit Gipsschwebstoffen abscheiden und längere Zeit im Gipsabscheider verbleiben. Copolymere gegen Gipsablagerungen sind in US2006/0100406 A1 beschrieben. Es ist daher Aufgabe der Erfindung, ein Mittel bereitzustellen, das sowohl die Abscheidung von Schwebstoffen beschleunigt als auch Geruchsbelästigungen weitgehend unterbindet.

Diese Aufgabe wird erfindungsgemäß durch die Verwendung eines Stoffgemischs als Gipsabscheidemittel gemäß Anspruch 1 gelöst. Vorteilhafte Weiterbildungen der Erfindung sind Gegenstand der abhängigen Ansprüche.

Der Erfindung liegt der Gedanke zugrunde, dem mit Gips verunreinigten Abwasser ein Stoffgemisch beizugeben, das einerseits das Abscheiden von Gips durch Ausflocken beschleunigt und andererseits desinfizierend wirkt. Zur Gipsabscheidung weist das Stoffgemisch ein Flockungsmittel auf, wobei ein vorzugsweise hochmolekularer Polyelektrolyt zur Anwendung kommt. Solche Flockungsmittel werden beispielsweise unter dem Markennamen Praestol vertrieben. Zudem weist das Stoffgemisch ein Desinfektionsmittel auf, das zumindest zwei Bestandteile aufweist. Zum einen ein Monoterpen, vorzugsweise Thymol, das desinfizierend, fungizid und bakterizid wirkt. Zum anderen eine aromatische Carbonsäure, insbesondere Benzoesäure, die gegen grampositive Bakterien effektiver ist. Als Polyelektrolyt kommt vorzugsweise Polyacrylamid zum Einsatz.

Der Anteil des Monoterpens am Gesamtvolumen des Stoffgemischs beträgt zweckmäßig mindestens 10 % und höchstens 40 %, vorzugsweise mindestens 20% und höchstens 30%, in einem bevorzugten Ausführungsbeispiel etwa 24%. Gemäß einem alternativen Ausführungsbeispiel kann auch der Anteil des Monoterpens am Gesamtvolumen des Desinfektionsmittels diese Werte annehmen. Das Stoffgemisch kann als weiteren Bestandteil Natriumcarbonat und/oder Zellulose aufweisen, so dass ein Pressen des in Pulverform vorliegenden Stoffgemischs in Tablettenform vereinfacht wird.

Zusammenfassend ist folgendes festzuhalten: Die Erfindung betrifft die Verwendung eines Stoffgemischs zum Abscheiden von Schwebstoffen aus einer Flüssigkeit, insbesondere zum Abscheiden von Gips aus Wasser, mit einem Flockungsmittel zum Binden von Schwebstoffen und mit einem Desinfektionsmittel, wobei das Flockungsmittel einen Polyelektrolyten, insbesondere einen hochmolekularen Polyelektrolyten, aufweist und wobei das Desinfektionsmittel ein Monoterpen und eine aromatische Carbonsäure aufweist.

## Patentansprüche

1. Verwendung eines Stoffgemischs als Gipsabscheidemittel in einer Gipsabscheidevorrichtung, in die mit Gips verunreinigtes Wasser eingeleitet wird, in der Gips aus dem Wasser abgeschieden wird und aus der das solchermaßen vorgereinigte Wasser ausgeleitet wird, wobei das Stoffgemisch ein Flockungsmittel zum Binden von Schwebstoffen und ein Desinfektionsmittel aufweist, wobei das Flockungsmittel einen Polyelektrolyten, insbesondere einen hochmolekularen Polyelektrolyten, aufweist und wobei das Desinfektionsmittel ein Monoterpen und eine aromatische Carbonsäure aufweist.

2. Verwendung eines Stoffgemischs nach Anspruch 1, **dadurch gekennzeichnet, dass** der Polyelektrolyt Polyacrylamid ist.

3. Verwendung eines Stoffgemischs nach Anspruch 1 oder 2, **dadurch gekennzeichnet, dass** das Monoterpen Thymol ist.

4. Verwendung eines Stoffgemischs nach einem der vorangehenden Ansprüche, **dadurch gekennzeichnet, dass** die aromatische Carbonsäure Benzoesäure ist.

5. Verwendung eines Stoffgemischs nach einem der vorangehenden Ansprüche, **dadurch gekennzeichnet, dass** der Anteil des Monoterpens am Gesamtvolumen des Stoffgemischs mindestens 10 Volumen% und höchstens 40 Volumen% beträgt.

6. Verwendung eines Stoffgemischs nach Anspruch 5, **dadurch gekennzeichnet, dass** der Anteil des Monoterpens am Gesamtvolumen des Stoffgemischs mindestens 20 Volumen% und höchstens 30 Volumen% beträgt.

7. Verwendung eines Stoffgemischs nach einem der Ansprüche 1 bis 4, **dadurch gekennzeichnet, dass** der Anteil des Monoterpens am Gesamtvolumen des Desinfektionsmittels mindestens 10 Volumen% und höchstens 40 Volumen% beträgt.

8. Verwendung eines Stoffgemischs nach Anspruch 7, **dadurch gekennzeichnet, dass** der Anteil des Monoterpens am Gesamtvolumen des Desinfektionsmittels mindestens 20 Volumen% und höchstens 30 Volumen% beträgt.

9. Verwendung eines Stoffgemischs nach einem der vorangehenden Ansprüche, **dadurch gekennzeichnet, dass** das Stoffgemisch als weiteren Bestandteil Natriumcarbonat und/oder Zellulose aufweist.

## Claims

1. Use of a material mixture as gypsum removal means in a gypsum removal device, into which impure water is introduced with gypsum, in which gypsum is removed from the water and from which the water pre-cleaned in this manner is channelled out, wherein the material mixture has a flocking agent to bind suspended materials and a disinfectant, wherein the flocking agent has a polyelectrolyte, in particular a high-molecular polyelectrolyte and wherein the disinfectant has a monoterpene and an aromatic carboxylic acid.

2. Use of a material mixture according to Claim 1, **characterised in that** the polyelectrolyte is polyacrylamide.

3. Use of a material mixture according to Claim 1 or 2, **characterised in that** the monoterpene is thymol.

4. Use of a material mixture according to any one of the preceding claims, **characterised in that** the aromatic carboxylic acid is benzoic acid.

5. Use of a material mixture according to any one of the preceding claims, **characterised in that** the proportion of monoterpene in the overall volume of the material mixture is at least 10 vol% and at most 40 vol%.

6. Use of a material mixture according to Claim 5, **characterised in that** the proportion of monoterpene in the overall volume of the material mixture is at least 20 vol% and at most 30 vol%.

7. Use of a material mixture according to any one of Claims 1 to 4, **characterised in that** the proportion of monoterpene in the overall volume of the disinfectant is at least 10 vol% and at most 40 vol%.

8. Use of a material mixture according to Claim 7, **characterised in that** the proportion of monoterpene in the overall volume of the disinfectant is at least 20 vol% and at most 30 vol%.

9. Use of a material mixture according to any one of the preceding claims, **characterised in that** the material mixture has sodium carbonate and/or cellulose as an additional component.

## Revendications

1. Utilisation d'un mélange de substances comme moyen de séparation du gypse dans un dispositif de séparation du gypse dans lequel de l'eau contaminée par du gypse est introduite, dans lequel le gypse est séparé de l'eau et duquel l'eau ainsi préépurée est déchargée, le mélange de substances présentant un agent floculant pour lier les matières en suspension et un agent désinfectant, l'agent floculant présentant un polyélectrolyte, en particulier un polyélectrolyte de masse moléculaire élevée, et l'agent désinfectant présentant un monoterpène et un acide carboxylique aromatique.

2. Utilisation d'un mélange de substances selon la revendication 1, **caractérisée en ce que** le polyélectrolyte est du polyacrylamide.

3. Utilisation d'un mélange de substances selon la revendication 1 ou 2, **caractérisée en ce que** le monoterpène est du thymol.

4. Utilisation d'un mélange de substances selon l'une des revendications précédentes, **caractérisée en ce que** l'acide carboxylique aromatique est de l'acide benzoïque.

5. Utilisation d'un mélange de substances selon l'une des revendications précédentes, **caractérisée en ce que** la proportion du monoterpène dans le volume total du mélange de substances est d'au moins 10 % en volume et d'au plus 40 % en volume.

6. Utilisation d'un mélange de substances selon la revendication 5, **caractérisée en ce que** la proportion du monoterpène dans le volume total du mélange de substances est d'au moins 20 % en volume et d'au plus 30 % en volume.

7. Utilisation d'un mélange de substances selon l'une des revendications 1 à 4, **caractérisée en ce que** la proportion du monoterpène dans le volume total de l'agent désinfectant est d'au moins 10 % en volume et d'au plus 40 % en volume.

8. Utilisation d'un mélange de substances selon la revendication 7, **caractérisée en ce que** la proportion du monoterpène dans le volume total de l'agent désinfectant est d'au moins 20 % en volume et d'au plus 30 % en volume.

9. Utilisation d'un mélange de substances selon l'une des revendications précédentes, **caractérisée en ce que** le mélange de substances présente du carbonate de sodium et/ou de la cellulose comme autres constituants.
